# EUROPÄISCHE PATENTSCHRIFT

(11) **EP 0 586 729 B1**
(45) Veröffentlichungstag und Bekanntmachung des Hinweises auf die Patenterteilung: **20.08.2003**
(21) Anmeldenummer: 92115401.9
(22) Anmeldetag: 09.09.1992
(51) Int. Cl.: B32B 27/08, F16L 9/133

(54) **Laminatkunststoffe auf Basis von Thermoplasten- und ungesättigten Polyesterharzen oder Epoxidharzen**
Plastic laminates made from thermoplastics and unsaturated polyester resins or epoxy resins
Produits stratifiés en matière plastique à partir de matière thermoplastique et de résines de polyester insaturées ou des résines époxydes

(43) Veröffentlichungstag der Anmeldung: 16.03.1994
(73) Patentinhaber: Knappe, Holger, D-23845 Grabau (DE)
(72) Erfinder: Knappe, Holger, D-23845 Grabau (DE)
(74) Vertreter: Siewers, Gescha, Dr.

(56) Entgegenhaltungen:
- EP-A- 0 204 306
- EP-A- 0 345 450
- GB-A- 2 099 753
- GB-A- 2 116 476
- US-A- 4 189 452
- US-A- 4 273 599
- DATABASE WPIL Week 0293, Derwent Publications Ltd., London, GB; AN 93-009483

## Beschreibung

Die Erfindung betrifft Laminat- oder Verbundkunststoffe, die zunehmend auf vielen Gebieten der Technik Verwendung finden. Durch die Kombination von zwei oder mehreren Kunststoffen kann man häufig erreichen, daß nach nachteilige Eigenschaften des einen Kunststoffes durch die Verbindung mit einem weiteren Kunststoff positiv beeinflußt oder aufgehoben werden können. Zu den Verbundkunststoffen gehören beispielsweise auch Kombinationen, bei denen eine Innenschicht aus einem bestimmten Kunststoff mit einer häufig faserverstärkten Außenschicht aus ungesättigten Polyester- oder Epoxidharzen verbunden ist.

Ein Nachteil der ungesättigten Polyesterharze, im folgenden UP genannt, die viele technologisch wünschenswerte Eigenschaften aufweisen, besteht allerdings in der beträchtlichen Schrumpfung dieser Kunststoffe beim Aushärten, die bis zu 6 bis 10 % betragen können und auch bei Füllungen mit Fasern, insbesondere Glasfasern noch immer beträchtliche Werte aufweist. Wenn eine Schrumpfung der UP-Harze beim Vernetzen vermieden werden soll, ist in der Regel die Verwendung von Füllstoffen notwendig, die aber häufig aus anderen Gründen unerwünscht sind oder zu technischen Bearbeitungsschwierigkeiten führen können. Die gleichen Nachteile weisen Epoxidharze, im folgenden EP genannt, auch auf.

Laminatkunststoffe beispielsweise für Rohre erfordern daher bis heute hin ein relativ aufwendiges Herstellungsverfahren, da in der Regel die Innenschicht als sogenannter Liner ausgebildet wird, der auf einen Dorn aufgesetzt werden muß und dann von außen mit der Mantelschicht bewickelt werden kann. Beim Vernetzen der Mantelschicht, die bisher üblicherweise thermisch durchgeführt wird, ergibt sich aber eine Schrumpfung, die ihrerseits wieder zu Haarrissen im Liner führen kann. Die Produktion solcher Rohre erfordert daher nicht nur viel Erfahrung, sondern ist auch zeit- und geldaufwendig, was sich an den relativ hohen Preisen der Fertigprodukte bemerkbar macht. Anstelle der üblichen thermischen Vernetzung der Aussenschicht ist bereits auch die Kalthärtung solcher Kunstharze bekannt, die aber ihrerseits den Nachteil hat, daß das mit Härter und Beschleuniger versehene UP-Harz nur sehr kurze Verarbeitungszeiten des Ansatzes zuläßt. Auch EP Harze lassen sich durch Kalthärtung verarbeiten; die Härtezeit ist jedoch länger als bei UP-Harzen.

Die US 4,189,452 offenbart ein Verfahren zur Herstellung außenverstärkter PVC-Rohre, bei dem das Rohr mit polyesterharzgetränkten Glasfaserfilamenten umwickelt wird. Die Härtung der faserverstärkten Reaktionsharze erfolgt durch Kalthärtung.

Die EP 0 345 450 betrifft Kunststoffbehälter für Flüssigkeit oder Gase mit einer Innenschicht aus Polypropylen einer darauffolgenden auf geodätischen Linien verlegten Glasfaserschicht und einer äußeren Beschichtung aus härtbaren Reaktionsharzen.

Es besteht daher noch ein Bedürfnis nach praktischen schrumpffreien Laminatkunststoffen aus Thermoplasten als Innen- und Reaktionsharzen als Außenschicht, die in einem relativ preisgünstigen Verfahren hergestellt werden können.

Überraschenderweise wurde jetzt festgestellt, daß Verbundkunststoffe, vorzugsweise in der Form von Rohren, mit einer Innenschicht aus Thermoplasten und einer Außensicht aus In der Regel faserverstärkten Reaktionsharz in einfacher Weise Hergestellt werden könne, wenn die Härtung der Reaktonsharze als Lichthärtung bei etwa 20-60°C erfolgt und die Innenschicht als verlorener Dorn mitbenutzt ist und die Außenschicht im Wickelverfahren aufgetragen ist.

UP-Harze werden aus mehrbasischen ungesättigten Carbonsäuren wie Maleinsäure, Fumarsäure, Itakonsäure oder deren Anhydride, Phthalsäure und anderen ungesättigten Säuren durch Umsetzung mit gesättigten zweiwertigen Alkoholen wie beispielsweise Ethylenglykol, Propan- und Butandiole, Zyklohexandimethanol oder Neopentylglykol gewonnen. Bei der Umsetzung erhält man Harze mit einem Molekulargewicht von etwa 2000 bis 5000, die sofort in zur Vernetzung geeigneten Monomeren gelöst werden. Diese Lösungsmittel, die durch Addition an zwei Doppelbindungen überbrückend wirken können, sind vor allem Styrol, Methylstyrol oder diverse Allyl- oder Acrylester. Die Vernetzung tritt beim Erwärmen und/oder unter Einfluß von Peroxidkatalysatoren unter Mitwirkung von Beschleunigern wie beispielsweise Amin- und Schwermetallsalzen ein. Ggf. kann die Härtung auch durch Einwirkung durch ionisierender Strahlung oder von UV-Strahlung bei Gegenwart von Sensibilatoren, wie beispielsweise Chinonen erfolgen.

Erfindungsgemäß werden im Handel befindliche UP-Harze mit einem hohen Anteil an Neopentylglykol in der alkoholischen Komponente verwendet werden, wie sie beispielsweise von verschiedenen Firmen, unter anderem der Hoechst AG, der Bayer AG, der BASF AG, der CW Hüls AG oder der Vieanova Kunstharz AG auf dem Markt sind. Vorzugsweise wird aber eine Mischung aus etwa mindestens 30% Neopentylglykol, 30% Vinylester und im übrigen Isophthalsäure eingesetzt, wobei als Lösungsmittel und Stabilisator Styrol oder ggf. Acrylester Verwendung finden können. Der Glasfaseranteil in diesen Mischungen sollte in der Regel etwa 70 bis 80% betragen, wobei sich alle An-gaben auf das Gewicht beziehen. Als Peroxidkatalysator werden etwa 1,5 % BPO, 2 % eines Chinon und eine ganz geringe Menge im Bereich von etwa 0,05 bis 0,1 % einer Mischung aus einer Kobaltseife und Diethylanilin zugesetzt. Vorzugsweise ent- hält die Mischung auch einen Anteil in der Größenordnung von etwa 10 % eines Thermoplasten, und zwar insbesondere jenes Thermoplasten, der gleichzeitig als Innenschicht oder Liner Verwendung findet. Es hat sich nämlich herausgestellt, daß durch die Zugabe einer geringen Menge eines Thermoplasten die Schrumpfbeständigkeit bei Rohren soweit gesteigert werden kann, daß praktisch keine Schrumpfung mehr eintritt.

Epoxidharze entstehend durch Polyaddition von Verbindungen, die eine oder mehrere reaktionsfähige endständige Epoxidgruppen enthalten, mit Säuren, Säureanhydriden oder Aminen. Bei dieser Reaktion vernetzen die Harze und härten aus. Prototyp der EP-Harze ist das Umsetzungsprodukt aus Bisphenol A und Epichlorhydrin, aber anstelle des aromatischen Bisphenols A können auch ander Phenole eingesetzt werden und das Epichlorhydrin kann durch zykloaliphatische Oxide ersetzt werden.
Bei der Reaktion des Epoxides mit Alkoholen, Säure, Säureanhydriden oder Aminen, die nicht als Katalysator, sondern als Reaktionspartner zugegen sind, kommt es auf eine genaue Einhaltung der Mengenverhältnisse an, wenn Kunststoffe mit bestimten Eigenschaften hergestellt werden sollen. Als Härtungsmittel, die also in die Reaktionen eingreifen, werden überwiegend Säureanhydride oder aromatische Amine eingesetzt; die Härtezeit beträgt einige Stunden bei Temperaturen über 100°C. Auch für EP-Harze sind Kalthärter bekannt, nämlich Polyamine, Polyaminoamide und spezielle Säureanhydride. Als Verdünner und zur Einstellung der Viskosität werden sogenannte reaktive Verdünner eingesetzt, die selbst Epoxidgruppen enthalten und in den Härtungsmechanismus einbezogen werden.

Nicht modifizierte EP-Harze sind meistens relativ hart und spröde und neigen zur Bildung von Haarrissen. EP-Harze werden daher häufig mit Weichmachern verarbeitet oder es kann in dem reaktiven Härter eine geringe Menge eines Thermoplasten gelöst werden, um die Flexibilität zu verbessern. EP-Harze können auch einer Lichthärtung unterzogen werden.

Als Innenschicht oder Liner werden vorzugsweise PVC und je nach Anwendungszweck Reinst-PVC oder CPVC verwendet. Als CPVC bezeichnet man nachchloriertes Polyvinylchlorid, das Chlorgehalte bis zu 64 Gew.-% aufweisen kann und sich gegenüber PVC Homopolymerisaten durch eine höhere Temperaturstandfestigkeit und bessere chemische Beständigkeit auszeichnet. Weichemacherfreies nachchloriertes Polyvinylchlorid ist lebensmitteltechnologisch unbedenklich und darf beispielsweise zur Herstellung von Schläuchen, Schankeinrichtungen u.ä. verwendet werden.

Je nach späterem Verwendungszweck kann die Innenschicht oder der Liner aber auch aus anderen Thermoplasten bestehen; beispielsweise wird die Verwendung von PPO in den Fällen bevorzugt, in denen Wert auf eine erhöhte Chemikalienbeständigkeit gelegt werden muß. PPO ist damit ebenfalls im lebensmitteltechnologischen Bereich einsetzbar und zeichnet sich durch seine chemische und mechanische Resistenz auch bei erhöhten Temperaturen aus. Für bestimmte Zwecke kann auch das physiologisch unbedenkliche PVDF Verwendet werden.

Die Herstellung der erfindungsgemäßen Kunststoffe erfolgt in an sich bekannter Weise, in dem die Innenschicht in Form eines Liners beispielsweise aus PVC oder PPVC verwendet wird, beispielsweise in der Form von Rohren, die außen mit dem beschriebenen Harz ummantelt werden, und zwar vorzugsweise in glasfaserverstärkter Form, beispielsweise durch Wickeln. Bei den Wickelverfahren werden Faserstränge oder Bänder in einem Durchlaufbad mit Harz getränkt und anschließend unter Spannung auf einen rotierenden Kern gewickelt, wobei in der Regel der Liner als Kern eingesetzt wird. Rotationskörper können aber auch im Schleuderverfahren oder durch Rotationsspritzen hergestellt werden. Deckel, Böden und Anschlußfittings können eingepreßt oder eingeklebt werden, vorzugsweise werden sie aber auf den Liner aufgesetzt und durch das Wickelverfahren in den Mantel integriert.

Die Aushärtung der erfindungsgemäßen Laminatkunststoffe erfolgt durch Kalthärtung, da bei einer Heißhärtung die für den Liner erlaubte Temperaturen überschritten werden und dadurch Formveränderungen des Liners verursacht werden könnten. Bei der Kalthärtung unter Zusatz der üblichen Photoinitiatoren im UV-Licht im Bereich einer Wellenlänge zwischen etwa 300 bis 350 nm ist aber die durch die Polymerisation bedingte Wärmetönung so gering, daß eine schädigende Temperaturbelastung des Liners ausgeschlossen werden kann. Wie Untersuchungen gezeigt haben, tritt bei der Kalthärtung eine völlig feste Verbindung zwischen dem Liner und dem ungesät-tigten Polyester ein, da anscheinend unter Einwirkung der Härtungsmittel und des UV-Lichtes eine teilweise Anlösung des Liners durch den neopentylalkoholhaltigen Polyester erfolgt, so daß als Resultat sich eine völlig feste schrumpffreie Verbindungsschicht ausbildet. Wegen der bei der Herstellung notwendigen Kalthärtung werden die UP-Harze in der Regel in ungefärbter Form eingesetzt, es hat sich aber gezeigt, daß auch blau eingefärbte, nicht pigmentierte UP-Harze verwendbar sind.

Auch die EP-Harze können einer Kalthärtung unterzogen werden, wobei ebenfalls Licht einer Wellenlänge von 300 bis 350 nm eingesetzt wird. Photoinitiator beim Kalthärten von EP-Harzen sind beispielseise spezielle substituierte Phosphinoxide, oft zusammen mit Polyaminen verwendet, die ebenfalls Reaktionspartner bei der Polyaddition darstellen oder Cyclopentadien-Benzol-Eisen-Sandwich Komplexe. Nach den bisherigen Feststellungen ist davon auszugehen, daß auch in diesen Fällen eine völlig feste Verbindung zwischen dem Liner und dem Reaktionsharz eintritt, da anscheinend durch die reakti-ven Härter ebenfalls bei der Kalthärtung eine teilweise An-lösung des Liners erfolgt.

Aufgrund des Herstellungsverfahrens lassen sich die Wandstärken der Mantelschicht im Vergleich zu bisherigen Produkten wesentlich reduzieren bei gleicher Belastbarkeit, die von Betriebsdrucken bis zu 70 bar ausgeht. Durch die dadurch bedingte Materialeinsparung und das sehr viel weniger zeitaufwendige Herstellungsverfahren lassen sich die Produkte äußerst preisgünstig herstellen.

Besonders überraschend ist die beträchtliche Druckfestigkeit der erfindungsgemäßen Kunststoffe trotz der relativ dünnen Mantelschichten. Während beispielsweise Epoxidbasisrohre üblicher Bauweise ohne Liner bei Betriebsdrücken von 10 bar eine Wandstärke von bis zu 5 cm aufweisen müssen, beträgt die Mantelstärke entsprechender erfindungsemäßer Rohre nur knapp 1 cm bei Betriebsdrucken bis 25 bar und einem Sicherheitsfaktor von S6. Der Sicherheitsfaktor gibt das Vielfache des Betriebsdruckes bis zum Berstruck an, d.h. daß die Rohre kurzfristig Belastungen bis zu 300 bar standhalten. Ein besonderer Vorzug liegt darin, daß die Rohre aufgrund des Liners auch bei derartigen Betriebsdrucken mediendicht sind im Gegensatz zu den bisher eingesetzten Rohren, die bei Dauerbelastung aufgrund von Haarrissen zum Sickern neigen. In einer bevorzugten Ausführungsform umfaßt die Erfindung daher Laminatkunststoffe, die bei Betriebsdrucken von 25 bar oder darüber und einem Sicherheitsfaktor von 4 oder 6 (bestimmt nach ASTM X) mediendicht sind.

Außerdem hat sich herausgestellt, daß durch die Kalthärtung unter den angegebenen Bedingungen eine praktisch vollständige Polymerisation des als Lösungsmittel und Stabilisators verwendeten Styrols oder Acrylesters erzielen läßt, so daß im Endprodukt die Styrolrestgehalte unter 0,05 % und vorzugsweise unter 0,005 % liegen.

Die erfindungsgemäßen Verbundkunststoffe werden vorzugsweise in der Form von Rohren hergestellt und in dieser Form bei der reversen Osmose bzw. der Ultrafiltration eingesetzt. Sie können aber auch in der Lebensmitteltechnologie Verwendung finden beispielsweise bei der Verarbeitung von Bier, Molke, Obstsäften o.ä. Ein weiterer Anwendungsbereich liegt in der Herstellung von Reinstwasser, wie es beispielsweise bei der Produktion von elektronischen Bauteilen benötigt wird. Hauptanwendungsgebiet ist allerdings die Meerwasserentsalzung, da bei dieser Form der praktisch angewendeten reversen Osmose die physiologische Unbedenklichkeit der Liner wichtig ist, wobei hinzukommt, daß die meist verwendeten Liner aus Rein-PVC eine sehr glatte Oberlfläche aufweisen, so daß eine wachstumsarme Innenschicht vorliegt, die die sonst übliche Ansiedelung von Algen und anderen Mikroorganismen aus dem Meerwasser verhindert bzw. stark reduziert.

Die Erfindung wird im folgenden anhand eines Beispieles näher erläutert:

Rohre für die reverse Osmose aus PVC mit einem Durchmesser von etwa 11 cm werden in an sich bekannter Weise mit mit UP-Harz getränkten Glasfasern im Wickelverfahren ummantelt. Als UP-Harz wird ein Produkt eingesetzt, das ein Reaktionsharz aus etwa 30 % Neopentylglykol, 30 % Vinylester, 30 % Isopthalsäure und 10 % PVC in Styrol als Lösungsmittel enhält. Als Beschleuniger/Sensibilisatorsystem werden etwa 1,5 % BPO, 1 % Photoinitiator, 3 % eines Chinons und 0,05 % einer Mischung aus Kobaltseife und Diethylanilin zugegeben. Die Härtung erfolgt durch Bestrahlung mit UV-Licht der Wellenlänge 300 nm während einer Zeitdauer von etwa 10 Minuten.

## Patentansprüche

1. Rohre aus Laminatkunststoffen mit einer Innenschicht aus Thermoplasten und einer Außenschicht aus in der Regel faserverstärkten Reaktionsharzen, **dadurch gekennzeichnet, daß** bei der Herstellung der Rohre die Innenschicht als verlorener Dorn benutzt und die Außenschicht im Wickelverfahren aufgetragen ist und wobei die Reaktionsharze bei Temperaturen zwischen 20 bis 60°C lichtgehärtet sind.

2. Rohre nach Anspruch 1, **dadurch gekennzeichnet, daß** sie bei Betriebsdrucken von 25 bar oder mehr und einem Sicherheitsfaktor von 4 bis 6 mediendicht sind.

3. Rohre nach Anspruch 1 bis 2, **dadurch gekennzeichnet, daß** als Reaktionsharz ein UP-Harz mit einem Gehalt an etwa 30%, bezogen auf das Gewicht, oder mehr Neopentylglykol vorliegt.

4. Rohre nach Anspruch 1, **dadurch gekennzeichnet, daß** als Reaktionsharz ein Epoxidharz vorliegt.

5. Rohre nach Anspruch 1 bis 4, **dadurch gekennzeichnet, daß** als Fasern Glasfaser in Mengen von etwa 70 bis 80% enthalten sind.

6. Rohre nach Anspruch 1 bis 5, **dadurch gekennzeichnet, daß** das Reaktionsharz einen Zusatz an kompatiblen Thermoplasten bis zu etwa. 10% aufweist.

7. Rohre nach Anspruch 1 bis 6, **dadurch gekennzeichnet, daß** als Thermoplast PVC, CPVC, PPO oder PVDF enthalten ist.

8. Rohre nach Anspruch 1 bis 4 und 5 bis 7, **dadurch gekennzeichnet, daß** der Reststyrolgehalt bei Verwendung von UP-Harzen in der Außenschicht unter 0,05, vorzugsweise unter 0,005 % liegt.

9. Verfahren zur Herstellung der Rohre aus Laminatkunststoffen nach Anspruch 1, **dadurch gekennzeichnet, daß** die Innenschicht als verlorener Dorn benutzt und die Außenschicht im Wickelverfahren aufgetragen und bei Temperaturen von etwa 20 bis 60°C bei Wellenlängen von etwa 300 bis 350 nm lichtgehärtet wird.

10. Verwendung der Rohre aus Laminatkunststoffen nach Anspruch 1 im Bereich der reversen Osmose bzw. Ultrafiltration.

## Claims

1. Tubes of laminate plastics with an inner layer of thermoplastics and an outer layer of typically fibre-reinforced reaction resins, **characterised in that**, during the production of the tubes, the inner layer is used as a lost mandrel and the outer layer is applied by a winding process and wherein the reaction resins are light-cured at temperatures of between 20 and 60°C.

2. Tubes according to claim 1, **characterised in that** they are media-tight under operating pressures of 25 bar or more and with a safety factor of 4 to 6.

3. Tubes according to claims 1 to 2, **characterised in that** a UP resin with a content of about 30% or more, based on the weight, of neopentyl glycol is present as the reaction resin.

4. Tubes according to claim 1, **characterised in that** an epoxy resin is present as the reaction resin.

5. Tubes according to claims 1 to 4, **characterised in that**, as fibres, glass fibres are contained in quantities of about 70 to 80%.

6. Tubes according to claims 1 to 5, **characterised in that** the reaction resin contains an addition of up to about 10% of compatible thermoplastics.

7. Tubes according to claims 1 to 6, **characterised in that** PVC, CPVC, PPO or PVDF is contained as the thermoplastic.

8. Tubes according to claims 1 to 4 and 5 to 7, **characterised in that** the residual styrene content with the use of UP resins in the outer layer is less than 0.05, preferably less than 0.005%.

9. Process for the production of tubes of laminate plastics according to claim 1, **characterised in that** the inner layer is used as a lost mandrel and the outer layer is applied by a winding process and light-cured at temperatures of about 20 to 60°C at wavelengths of about 300 to 350 nm.

10. Use of the tubes of laminate plastics according to claim 1 in the field of reverse osmosis or ultrafiltration.

## Revendications

1. Tube en plastique stratifié comportant une couche interne en polymère thermoplastique et une couche externe en résine durcie, généralement renforcée par des fibres, **caractérisé par le fait que** la couche interne joue, lors de la fabrication du tube, le rôle de mandrin perdu et que la couche externe est appliquée par bobinage, la résine étant photodurcie à une température comprise entre 20 et 60 °C.

2. Tube selon la revendication 1, **caractérisé par le fait qu'**il est imperméable aux fluides à une pression de fonctionnement de 25 bar ou plus et pour un coefficient de sécurité de 4 à 6.

3. Tube selon la revendication 1 ou 2, **caractérisé** parle fait que l'on utilise, comme résine durcie, une résine de polyester insaturé (résine UP) contenant environ 30 % en poids ou plus de néopentylglycol.

4. Tube selon la revendication 1, **caractérisé par le fait que** la résine durcie est une résine époxy.

5. Tube selon l'une des revendications 1 à 4, **caractérisé par le fait que** les fibres sont des fibres de verre présentes à raison de 70 % à 80 %.

6. Tube selon l'une des revendications 1 à 5, **caractérisé par le fait que** la résine durcie comprend jusqu'à 10 % d'une résine thermoplastique compatible.

7. Tube selon l'une des revendications 1 à 6, **caractérisé par le fait que** la résine thermoplastique est une résine PVC, CPVC, PPO ou PVDF.

8. Tube selon l'une des revendications 1 à 4 et 5 à 7, **caractérisé par le fait que** la teneur résiduelle en styrène en cas d'utilisation de résine UP dans la couche externe est inférieure à 0,05 %, de préférence inférieure à 0,005 %.

9. Procédé de fabrication d'un tube en plastique stratifié selon la revendication 1, **caractérisé par le fait que** la couche interne est utilisée comme mandrin perdu, que la couche externe est appliquée par bobinage et qu'il comprend un photodurcissement à une température comprise entre environ 20 et 60 °C à une longueur d'onde comprise entre 300 nm et 350 nm.

10. Utilisation d'un tube en plastique stratifié selon la revendication 1 pour l'osmose inverse ou l'ultrafiltration.
